# EUROPEAN PATENT SPECIFICATION

(11) **EP 1 658 929 B1**
(45) Date of publication and mention of the grant of the patent: **21.05.2008**
(21) Application number: 04771762.4
(22) Date of filing: 11.08.2004
(51) Int. Cl.: B23Q 11/00

(54) **CHIP REMOVING METHOD AND AIR BLOW NOZZLE FOR REMOVING CHIP**
SPANENTFERNUNGSVERFAHREN UND LUFTBLASDÜSE ZUM ENTFERNEN VON SPÄNEN
PROCEDE D'EVACUATION DES COPEAUX ET SOUFFLANTE PERMETTANT D'EVACUER DES COPEAUX

(30) Priority: 19.08.2003 JP 2003207865
(43) Date of publication of application: 24.05.2006
(73) Proprietor: HONDA MOTOR CO., LTD., Tokyo 107-8556 (JP)
(72) Inventor: IMAMURA, Nobuo, c/o Honda Giken Kogyo K.K., Hamamatsu-shi, Shizuoka 433-8114 (JP); OGURA, Masayoshi, c/o Honda Giken Kogyo K.K., Hamamatsu-shi, Shizuoka 433-8114 (JP); YAMAMOTO, Yoshinao, c/o Honda Giken Kogyo K.K., Hamamatsu-shi, Shizuoka 433-8114 (JP)
(74) Representative: Piésold, Alexander James
(86) International application number: PCT/JP2004/011801
(87) International publication number: WO 2005/016593

(56) References cited:
- JP-A- 62 246 455
- JP-U- 2 015 244
- JP-U- 51 122 479
- JP-U- 62 138 546

## Description

### BACKGROUND OF THE INVENTION

### Field of the Invention

The present invention relates to a chip removal method and a chip removal air blow nozzle that are used to remove chips and cutting water and the like that remain adhering to a bag-shaped machined hole that is formed in a work piece.

### Description of Related Art

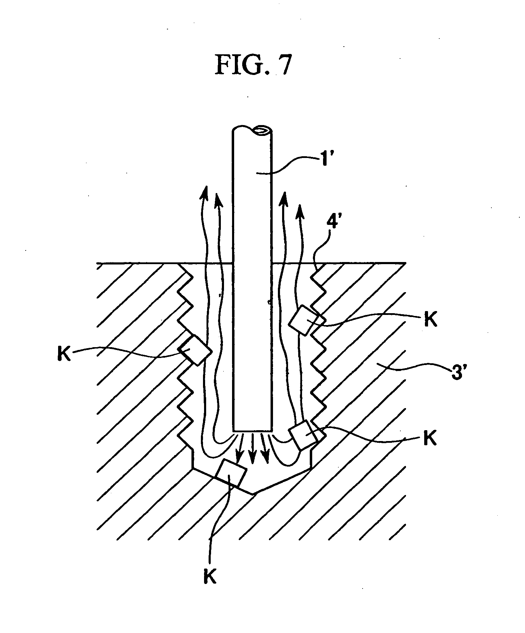

Conventionally, as is shown in FIG. 7, in order to remove chips k that are left behind in a machined hole 4' in a work piece 3', a technology is employed in which air is blown out from an air blow nozzle 1' and the uplifted chips K and the like are suctioned so as to be removed from the machined hole 4' (Patent Document 1: Japanese Unexamined Patent Application, First Publication No. H09-85573, and Patent Document 2: Japanese Utility Model Application, First Publication (JP-U) No. H05-16078).

However, in this conventional technology, when the chips K and the like remaining in the machined hole 4' are lifted upwards by blowing air out from the air blow nozzle 1', problems occur such as the air flow rate being insufficient, or such as it not being possible to discharge the chips K smoothly to the outside due to the blowing force of the air forcing the chips K and the like in a direction pushing them into the machined hole 4'.

In particular, if the machined hole 4' is a threaded hole, chips K can easily be caught on the thread ridges. For this reason, it is necessary to perform tasks such as confirming whether or not the chips K have been properly removed, so that the number of processing steps increases.

Therefore, this invention provides a chip removal method and a chip removal air blow nozzle that make it possible to reliably and easily remove chips and the like.

JP 2015244 U discloses an air blow nozzle.

JP 51122479 U discloses a chip removal method that removes residue such as chips that have remained in and adhered to an interior of a bag-shaped machined hole in a work piece, wherein after air is jetted out and blown against a bottom portion of the machined hole by using an air blow nozzle to change a flow of air that is circulating inside a nozzle into a spiral flow that moves in a direction towards the bottom portion of the machined hole, this spiral flow then blows upwards like a tornado from a vicinity of the bottom portion of the machined hole in a direction towards an aperture portion of the machined hole so that the residue inside the machined hole is uplifted by the spiral flow and removed. The nozzle includes a spiral flow creating portion that is provided at a nozzle distal end portion and changes a flow of air that is circulating inside the nozzle into a spiral flow.

JP 51122479 U also discloses a chip removal air blow nozzle that removes residue such as chips that have remained in and adhered to an interior of a bag-shaped machined hole in a work piece and includes: a nozzle distal end portion that is inserted into the machined hole; and a spiral flow creating portion that is provided in the nozzle distal end portion and changes a flow of air that is circulating inside the nozzle into a spiral flow.

### SUMMARY OF THE INVENTION

The present invention relates to a chip removal method characterised in that the spiral flow creating portion has a plurality of guide pieces that are formed at the distal end portion of the nozzle and are twisted into a screw shape.

By employing this type of structure, because chips and the like that are adhered to the interior of a machined hole are uplifted while tracking a spiral trajectory by a spiral flow that is blown up like a tornado from the vicinity of a bottom portion of the machined hole towards an aperture portion of the machined hole, and is removed through the aperture portion of the machined hole to the outside, even if the flow rate is not particularly fast, the chips and the like are not pushed against the bottom portion of the machined hole and the effect is obtained that the chips and the like can be smoothly removed both reliably and easily.

In addition, the present invention relates to a chip removal air blow nozzle characterised in that the spiral flow creating section has a plurality of guide pieces that are formed at the distal end portion of the nozzle and are twisted into a screw shape.

By employing this type of structure, if air is blown with the distal end portion of the air blow nozzle inserted into a machined hole, a spiral flow is generated in a spiral flow creating portion of the nozzle distal end portion. After this spiral flow is blown against the bottom portion of the machined hole, it flows in a spiral towards the aperture portion of the machined hole through a space between the nozzle distal end portion and the machined hole, and chips and cutting water and the like that have remained in and adhered to the interior of the machined hole can be uplifted and removed to the outside. As a result, even if the flow rate is not particularly fast, the chips and the like are not pushed against the bottom portion of the machined hole and can be smoothly removed both reliably and easily.

Furthermore, because the blown air is turned by the respective guide pieces and a spiral flow can be reliably created, the effect is obtained that a highly reliable spiral flow creating portion can be formed using a simple structure.

In the present invention, it is also possible when the machined hole is a female threaded hole for the spiral flow to turn in a direction in which the thread is loosened.

By employing this type of structure, because the spiral flow that flows between the machined hole and the outer circumference of the nozzle distal end portion flows smoothly towards the aperture portion of the machined hole in a regulated state while being guided by the grooves of the thread, chips and the like do not get caught on the thread ridges as is the case when air flows directly towards the aperture portion of a female threaded hole, and the effect is obtained that the chips and the like are uplifted efficiently with little loss together with the spiral flow along the thread grooves and are removed.

### BRIEF DESCRIPTION OF THE DRAWINGS

FIG. 1 is a schematic perspective view of a chip removal apparatus according to an embodiment of this invention.
FIG. 2 is a cross-sectional view of an air gun according to an embodiment of the invention.
FIG. 3 is a partial cross-sectional view showing a working situation of FIG. 2.
FIG. 4 is a plan view of a nozzle distal end portion of an air blow nozzle according to an embodiment of this invention.
FIG. 5 is a frontal view of a nozzle distal end portion of an air blow nozzle according to an embodiment of this invention.
FIG. 6 is an explanatory cross-sectional view showing a state in which residue is removed according to an embodiment of this invention.
FIG. 7 is an explanatory cross-sectional view corresponding to FIG. 6 of the conventional technology.

### DETAILED DESCRIPTION OF THE INVENTION

Preferred embodiments of the present invention are described below with reference made to the drawings. It should be understood, however, that these are exemplary of the invention and are not to be considered as limiting. For example, the respective component elements of these embodiments can be modified as is appropriate.

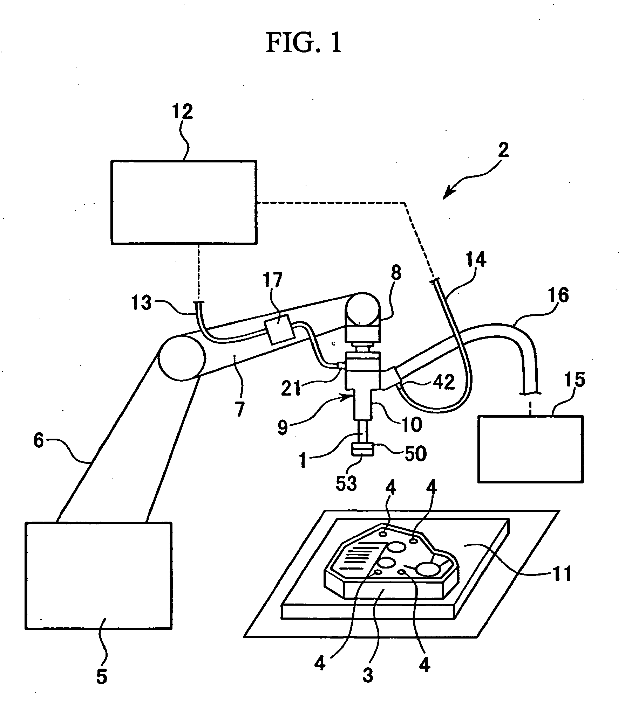

FIG. 1 is a perspective view schematically showing a chip removal apparatus 2 that uses an air blow nozzle 1 of an embodiment of this invention.

In FIG. 1, the chip removal apparatus 2 is installed on a production line or the like, and removes residue Z such as chips or cutting water (referred to below simply as residue Z) that remain adhering to the inside of the machined hole 4 by blowing air into a bag-shaped machined hole 4 in a work piece 3 such as, for example, a cylinder block or cylinder head in which a hole or a threaded hole has been machined by a processing machine (not shown).

Specifically, in the chip removal apparatus 2, a first arm 6 is supported on a base 5 so as to be able to swing freely in a vertical direction and so as to be able to rotate freely in a horizontal direction. A second arm 7 is supported so as to be able to swing freely on the first arm 6. An air gun 9 is rotatably attached to a third arm 8 that is supported so as to be able to swing freely on the second arm 7.

An air supply hose 13 that is used to blow air from an air supply source 12 into the machined holes 4 in a work piece 3 that is set in a jig 11 is connected to a gun body 10 of the air gun 9.

In addition, a recovery air supply hose 14 that is used to draw in the residue Z that is blown upwards from the machined holes 4 using an ejector action by blowing air that is supplied by the air supply hose 13 is connected to the air gun 9. Furthermore, a discharge hose 16 that discharges the residue Z that has been pushed out by the ejector action of the recovery air supply hose 14 by suctioning it using a vacuum apparatus 15 is also connected to the air gun 9. Here, a solenoid valve 17 that opens and closes the air supply hose 13 is provided on the air supply hose 13. Note that the air that is fed to the recovery air supply hose 14 is also supplied from the air supply source 12.

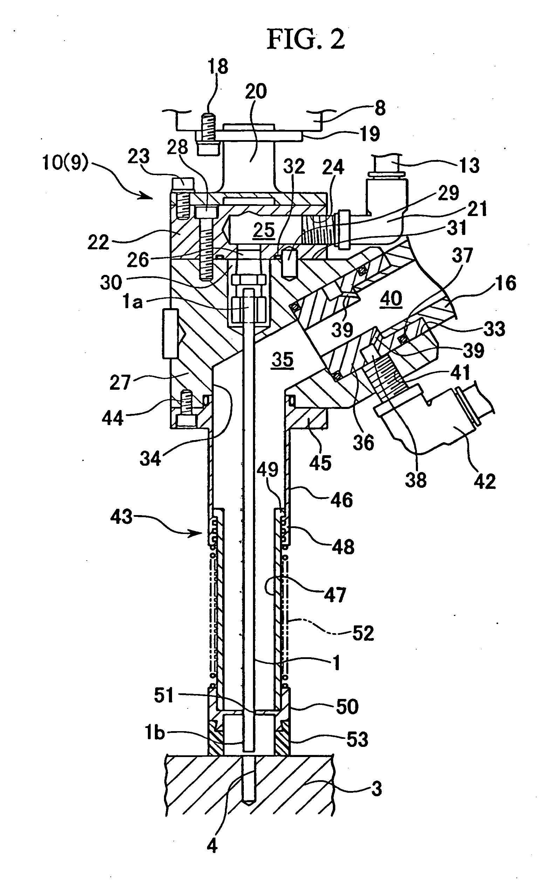

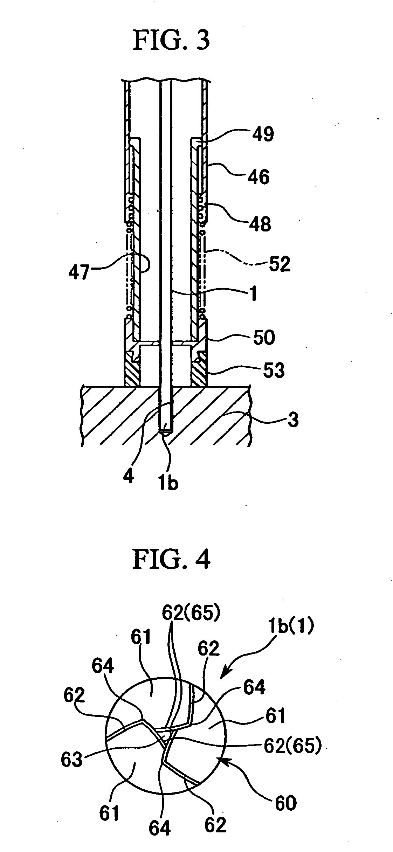

As is shown in FIGS. 2 and 3, a bracket 20 that is provided with a mounting seat 19 that is attached by a bolt 18 to the third arm 8 is provided above the gun body 10 of the air gun 9. An air supply block 22 to which is connected a nipple 21 of the air supply hose 13 is attached by a bolt 23 to the bracket 20. An air supply passage 25 is formed inside the air supply block 22. The air supply passage 25 is provided with a supply port 24 at an upper portion thereof, and is bent at the inside of the air supply block 22 so as to extend toward downwards. The air supply passage 25 opens in a bottom surface of the air supply block 22 to form a discharge aperture 26.

A main block 27 is attached by a bolt 28 and via a positioning pin 29 to the bottom surface of the air supply block 22. The main block 27 is provided with an air supply port 30 that is connected to the discharge aperture 26 of the air supply block 22. Here, an O-ring 32 that is a sealing member that surrounds the air supply port 30 is mounted on a top portion joining face 31 of the main block 27 where the main block 27 joins with the air supply block 22.

A base portion 1a of the air blow nozzle 1 is attached to the air supply port 30 of the main block 27 so as to face the supply portion 30. A distal end portion of the air blow nozzle 1 extends downwards from a bottom surface of the main block 27. A suction passage 35 that is open at a side portion connecting hole 33 and a bottom surface aperture portion 34 is provided in the main block 27. A bottom portion of this suction passage 35 is formed so as to surround the air blow nozzle 1.

An ejector member 36 is installed in the side portion connecting hole 33 of the suction passage 35 in the main block 27. This ejector member 36 is connected to the discharge hose 16 and is installed in an inner wall of the suction passage 35 via an O-ring 37. The ejector member 36 is a cylindrically shaped member and generates negative pressure in an ejector chamber 40 by blowing air from a plurality of jet holes 39 that are formed via a toroidal groove 38 that is formed inside the ejector member 36 in a center portion of the ejector member 36 so as to obliquely approach the discharge hose 16 side. The residue Z is suctioned from the aperture portion 34 side of the suction passage 35 by this negative pressure. Accordingly, a connecting aperture 41 that communicates with the toroidal groove 38 is formed in an external wall of the suction passage 35, and a nipple 42 of the recovery air supply hose 14 is connected to this connecting aperture 41.

In addition, a nozzle guide 43 is attached by a bolt 44 to the bottom surface of the main block 27. The nozzle guide 34 communicates with the aperture portion 34 of the main block 27, and is provided with an outer cylinder 46 that has a mounting flange portion 45 and with an inner cylinder 47 that is located inside the outer cylinder 46.

The outer cylinder 46 is fixed by fastening the mounting flange portion 45 to the bottom surface of the main block 27 using the bolt 44, and the inner cylinder 47 is attached so as to be able to protrude freely from the outer cylinder 46 while being prevented from coming out of the outer cylinder 46 by an engaging portion 48 that is formed at an inner circumferential edge on a bottom end of the outer cylinder 46 and an engaging portion 49 that is formed at an outer circumferential edge on a top end of the inner cylinder 47.

A guide 50 for the air blow nozzle 1 is fitted at a distal end of the inner cylinder 47, and the air blow nozzle 1 is supported so as to be able to freely come out relative to the inner cylinder 47 through an insertion hole 51 that is formed in a center portion of the guide 50. Note that the guide 50 is provided with an aperture portion. Here, a spring 52 that urges the inner cylinder 47 in a direction in which it protrudes relative to the outer cylinder 46 is attached between the circumferential edge portion of the distal end of the outer cylinder 46 and the top end surface of the guide 50.

A cylindrical grounding member 53 that abuts against a circumferential edge of the machined hole 4 ih the work piece 3 is attached to the guide 50. Note that this grounding member 53 is made from urethane because of its cushioning properties.

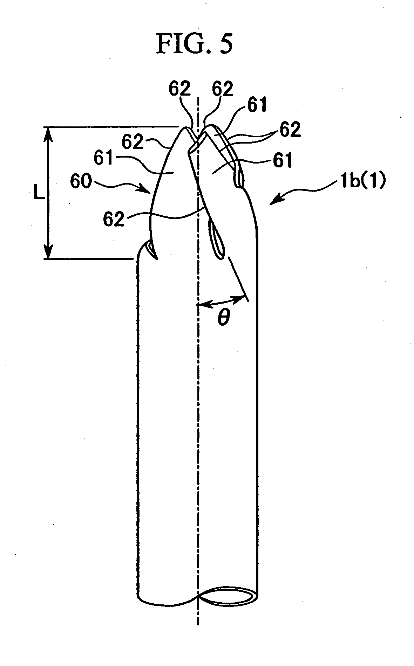

As is shown in FIGS. 4 and 5, in the air blow nozzle 1, a spiral flow creating portion 60 that changes the air flow through the interior of the air blow nozzle 1 into a spiral flow is provided in the nozzle distal end portion 1b that is inserted into the machined hole 4. This spiral flow creating portion 60 is formed by a plurality of guide pieces 61 that are formed at the nozzle distal end portion 1b and are twisted in a screw shape.

Specifically, three notch portions 62 are formed at 120° intervals in the nozzle distal end portion 1b. The notch portions 62 are inclined at an angle θ, which is between 30° and 45°, relative to the axial direction of the air blow nozzle 1, and have a length in a range of 4 mm to 6 mm from the nozzle distal end. The portions between these notch portions 62 are formed as three guide pieces 61, 61, and 61. As is also shown in FIG. 5, these three guide pieces 61, 61, and 61 are pushed down so as to be twisted in a clockwise direction as seen from the distal end side, and are formed so as to become narrower towards the tips thereof.

Accordingly, as is shown in FIG. 4, a substantially triangular aperture portion 63 is formed at the nozzle distal end as a result of the respective guide pieces 61 being twisted towards each other, and a peak portion 64 of each guide piece 61 is made to overlap a side piece 65 of the adjacent guide piece 61. As a result, the nozzle distal end portion 1b is formed so as to become narrower towards the tip thereof

According to the above described embodiment, if a work piece 3 in which hole machining has been performed in a previous step is transported while being set in a jig 11, the chip removal apparatus 2 that has previously undergone a teaching process moves the air gun 9 above a machined hole 4 using the first arm 6, the second arm 7, and the third arm 8, and then inserts the distal end of the air blow nozzle 1 into the machined hole 4 of the work piece 3. At this time, if the air gun 9 that has been correctly positioned is lowered, the grounding member 53 is first grounded against the perimeter of the machined hole 4. Next, the inner cylinder 47 is buried inside the outer cylinder 46 in resistance to the spring 52 resulting in the air blow nozzle 1 protruding relatively and being inserted inside the machined hole 4 (see FIG. 3).

At this time, because the nozzle distal end portion 1b of the air blow nozzle 1 is formed so as to become narrower at the tip thereof, the task of inserting the air blow nozzle 1 into the machined hole 4 is easily performed.

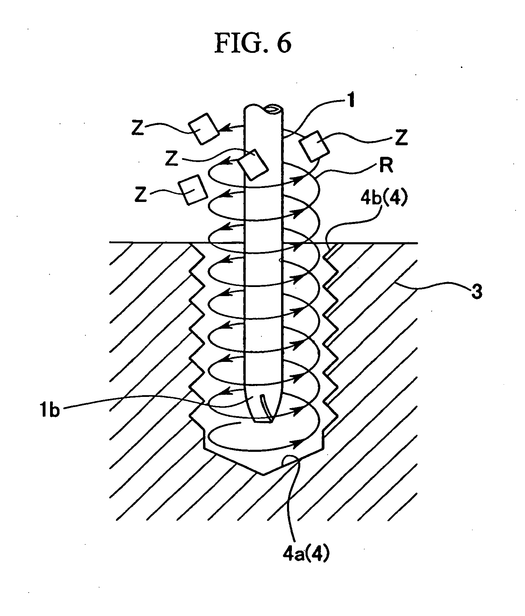

In this state, as is shown in FIG. 1, air is supplied from the air supply source 12 to the air supply hose 13 and the recovery air supply hose 14. In addition, while the vacuum apparatus 15 is being driven, if the solenoid valve 17 is opened and air is blown from the air blow nozzle 1, this air flow is changed into a spiral flow R heading in a direction towards the bottom portion 4a of the machined hole 4 by the air blow nozzle 1. Next, it is blown in a direction towards the bottom portion of the machined hole 4 and blows against the bottom portion 4a of the machined hole 4. The air flow then becomes a spiral flow R that is blown upwards like a tornado from the bottom portion 4a of the machined hole 4 in a direction towards the aperture portion 4b of the machined hole 4. Accordingly, as is shown in FIG. 6, residue Z such as chips and cutting water that is adhered to the inside of the machined hole 4 is lifted up while tracing a spiral trajectory due to the spiral flow R that is blown upwards like a tornado from the vicinity of the bottom portion 4a of the machined hole 4 in a direction towards the aperture portion 4b of the machined hole 4, and is removed to the outside through the aperture portion 4b of the machined hole 4.

Here, when air is being blown from the air blow nozzle 1 into the machined hole 4, by blowing air while intermittently opening and closing the solenoid valve 17 of the air supply hose 13 that is connected to the air supply source 12, the chip removal effect can be improved even further.

In contrast, because a negative pressure region is formed inside the ejector chamber 40 by the air that is supplied from the recovery air supply hose 14 and is blown from the toroidal groove 38 and the jet holes 39 of the ejector member 36 that is provided in the main block 27 of the air gun 9, the residue Z that has been uplifted by the spiral flow R is suctioned by this negative pressure into the ejector chamber 40 and is discharged from the discharge hose 16 by the vacuum apparatus 15.

In particular, as is shown in FIG. 6, if the machined hole 4 is a female threaded hole, then because the spiral flow R turns in the direction in which the thread is loosened, the spiral flow R that flows between the interior of the machined hole 4 and the outer circumference of the nozzle distal end portion 1b flows smoothly towards the aperture portion 4b of the machined hole 4 in a regulated state while being guided by the grooves of the thread. Accordingly, chips and the like remaining in residue do not get caught on the thread ridges as is the case when air that is blown from the nozzle distal end portion flows directly towards the aperture portion of a female threaded hole as in the conventional structure, which is shown in FIG. 7, and the residue Z is uplifted efficiently with little loss together with the spiral flow R along the thread grooves and is removed.

In addition, once the residue Z has been removed, the same operation is repeated by inserting the air blow nozzle 1 in the next machined hole 4.

According to the present invention, because the residue Z that is adhered to the interior of a machined hole 4 in a work piece 3 is uplifted while tracking a spiral trajectory by the spiral flow R that is blown up like a tornado from the vicinity of the bottom portion 4a of the machined hole 4 along a space between the nozzle distal end portion 1b and the machined hole 4 towards the aperture portion 4b of the machined hole 4, and is removed through the aperture portion 4b of the machined hole 4 to the outside by the discharge hose 16, even if the flow rate of the air that is flowing through the interior of the air supply hose 13 is not particularly fast, the residue Z is not pushed against the bottom portion 4a of the machined hole 4. Accordingly, the effect is obtained that the residue Z can be smoothly removed both reliably and easily.

Accordingly, because the residue Z can be reliably removed in a single operation, the task of confirmation is not required, the task of inspection can be omitted, and the number of operational steps can be decreased.

Moreover, because the spiral flow creating portion 60 has a plurality of guide pieces 61 that are formed on the nozzle distal end portion 1b and are twisted into screw shapes, the discharged air is turned by the respective guide pieces 61 and it is possible to reliably create the spiral flow R. Accordingly, the effect is obtained that a highly reliable spiral flow creating section 60 can be formed using a simple structure.

Note that, in the present invention, the number of notch portions 62 in the nozzle distal end portion 1b, namely, the number of guide pieces 61 is not limited to three. In addition, the guide pieces 61 are formed by forming the notch portions 62 in the nozzle distal end portion 1b, however, it is also possible to construct a spiral flow creating portion by inserting and attaching separate screw pieces in the nozzle distal end portion 1b.

## Claims

1. A chip removal method that removes residue (Z) such as chips that have remained in and adhered to an interior of a bag-shaped machined hole (4) in a work piece (3), wherein
after air is jetted out and blown against a bottom portion (4a) of the machined hole (4) by using an air blow nozzle (1) to change a flow of air that is circulating inside a nozzle (1) into a spiral flow (R) that moves in a direction towards the bottom portion (4a) of the machined hole (4), this spiral flow (R) then blows upwards like a tornado from a vicinity of the bottom portion (4a) of the machined hole (4) in a direction towards an aperture portion (4b) of the machined hole (4) so that the residue (Z) inside the machined hole (4) is uplifted by the spiral flow (R) and removed,
wherein the nozzle (1) includes a spiral flow creating portion (60) that is provided at a nozzle distal end portion (1b) and changes a flow of air that is circulating inside the nozzle (1) into a spiral flow (R), **characterised in that** the spiral flow creating portion (60) has a plurality of guide pieces (61) that are formed at the distal end portion (1b) of the nozzle (1) and are twisted into a screw shape.

2. A chip removal air blow nozzle (1) that removes residue (Z) such as chips that have remained in and adhered to an interior of a bag-shaped machined hole (4) in a work piece (3) comprising:
a nozzle distal end portion (1b) that is inserted into the machined hole (4); and
a spiral flow creating portion (60) that is provided at the nozzle distal end portion (1b) and changes a flow of air that is circulating inside the nozzle (1) into a spiral flow (R),
**characterised in that** the spiral flow creating section (60) has a plurality of guide pieces (61) that are formed at the distal end portion (1b) of the nozzle (1) and are twisted into a screw shape.

3. The chip removal air blow nozzle (I) according to claim 2, wherein, when the machined hole (4) is a female threaded hole, the spiral flow (R) turns in a direction in which the thread is loosened.

## Patentansprüche

1. Span-Entfernungsverfahren, das Reste (Z) wie z.B. Späne, die in einem taschenförmig herausgearbeiteten Loch (4) in einem Werkstück (3) verblieben und an dessen Innenseite haften geblieben sind, entfernt, wobei,
nachdem Luft ausgeströmt und gegen einen unteren Abschnitt (4a) des herausgearbeiteten Loches (4) geblasen wurde unter Verwendung einer Luftblasdüse (1), um eine Luftströmung, die innerhalb einer Düse (1) zirkuliert, in eine Spiralströmung (R) zu ändern, die sich in eine Richtung auf den unteren Abschnitt (4a) des herausgearbeiteten Loches (4) bewegt,
diese Spiralströmung (R) dann wie ein Tornado von der Nähe des unteren Abschnitts (4a) des herausgearbeiteten Loches (4) nach oben auf einen Öffnungsabschnitt (4b) des herausgearbeiteten Loches (4) hin bläst, so dass die Reste (Z) innerhalb des herausgearbeiteten Loches (4) durch die Spiralströmung (R) hochgehoben und entfernt werden,
wobei die Düse (1) einen Spiralströmungserzeugungsabschnitt (60) umfasst, der an einem distalen Endabschnitt (1 b) der Düse bereitgestellt ist und eine Luftströmung, die innerhalb der Düse zirkuliert, in eine Spiralströmung (R) ändert,
**dadurch gekennzeichnet,**
**dass** der Spiraiströmungserzeugungsabschnitt (60) eine Mehrzahl von Führungsstücken (61) aufweist, die am distalen Endabschnitt (1b) der Düse (1) gebildet sind und in eine Schraubenform verdreht sind.

2. Span-Entfernungs-Luftblasdüse (1), die Reste (Z) wie z.B. Späne, die in einem taschenförmig herausgearbeiteten Loch (4) in einem Werkstück (3) verblieben und an dessen Innenseite haften geblieben sind, entfernt, umfassend:
einen distalen Endabschnitt der Düse (1 b), der in das herausgearbeitete Loch (4) eingefügt ist;
und einen Spiralströmungserzeugungsabschnltt (60), der am distalen Endabschnitt der Düse (1 b) bereitgestellt ist und eine Luftströmung, die innerhalb der Düse (1) zirkuliert, in eine Spiralströmung (R) ändert,
**dadurch gekennzeichnet,**
**dass** der Spiralströmungserzeugungsabschnitt (60) eine Mehrzahl von Führungsstücken (61) aufweist, die am distalen Endabschnitt (1b) der Düse (1) gebildet sind und in eine Schraubenform verdreht sind.

3. Span-Entfernungs-Luftblasdüse (1) nach Anspruch 2, wobei dann, wenn das herausgearbeitete Loch (4) eine Innengewindebohrung ist, sich die Spiralströmung (R) in einer Richtung dreht, in welcher das Gewinde gelockert wird.

## Revendications

1. Procédé de retrait de copeaux qui retire des résidus (Z) tels que des copeaux qui sont restés et collent sur un intérieur d'un trou usiné (4) en forme de sac dans une pièce (3), dans lequel :
après que l'air a été expulsé et soufflé contre une partie inférieure (4a) du trou usiné (4) en utilisant une buse de soufflage d'air (1) pour changer un écoulement d'air qui circule à l'intérieur d'une buse (1) selon un écoulement en spirale (R) qui se déplace dans une direction allant vers la partie inférieure (4a) du trou usiné (4), cet écoulement en spirale (R) souffle ensuite vers le haut comme une tornade à partir d'une proximité de la partie inférieure (4a) du trou usiné (4) dans une direction allant vers une partie d'ouverture (4b) du trou usiné (4) de sorte que les résidus (Z) à l'intérieur du trou usiné (4) sont soulevés par l'écoulement en spirale (R) et retirés,
dans lequel la buse (1) comprend une partie de création d'écoulement en spirale (60) qui est prévue au niveau d'une partie d'extrémité distale de buse (1b) et change un écoulement d'air qui circule à l'intérieur de la buse (1) selon un écoulement en spirale (R), **caractérisé en ce que** la partie de création d'écoulement en spirale (60) a une pluralité de pièces de guidage (61) qui est formée au niveau de la partie d'extrémité distale (1b) de la buse (1) et est torsadée selon une forme de vis.

2. Buse de soufflage d'air (1) pour retirer des copeaux, qui retire des résidus (Z) tels que des copeaux qui sont restés et collent sur un intérieur d'un trou usiné (4) en forme de sac dans une pièce (3), comprenant :
une partie d'extrémité distale de buse (1b) qui est insérée dans le trou usiné (4) ; et
une partie de création d'écoulement en spirale (60) qui est prévue au niveau de la partie d'extrémité distale de buse (1b) et change un écoulement d'air qui circule à l'intérieur de la buse (1) en un écoulement en spirale (R),
**caractérisée en ce que** la section de création d'écoulement en spirale (60) a une pluralité de pièces de guidage (61) qui est formée au niveau de la partie d'extrémité distale (1b) de la buse (1) et est torsadée selon une forme de vis.

3. Buse de soufflage d'air (1) pour le retrait des copeaux selon la revendication 2, dans laquelle lorsque le trou usiné (4) est un trou fileté femelle, l'écoulement en spirale (R) tourne dans une direction dans laquelle le filetage est desserré.
